# FASCICULE DE BREVET EUROPEEN

(11) **EP 3 055 144 B1**
(45) Date de publication et mention de la délivrance du brevet: **13.12.2017**
(21) Numéro de dépôt: 14799505.4
(22) Date de dépôt: 09.10.2014
(51) Int. Cl.: B60C 23/04

(54) **PROCÉDÉ D'EXPLOITATION D'UN SYSTÈME DE SURVEILLANCE DE LA PRESSION ET/OU DE LA TEMPÉRATURE DES PNEUMATIQUES D'UN VÉHICULE ET DISPOSITIF PERMETTANT DE LE METTRE EN OEUVRE**
DURCH DRUCK- ODER TEMPERATURMESSUNGEN BASIERTES REIFENÜBERWACHUNGSVERFAHREN SOWIE -SYSTEM
TIRE MONITORING METHOD AND SYSTEM BASED ON PRESSURE OR TEMPERATURE MEASUREMENTS

(30) Priorité: 11.10.2013 FR 1359880
(43) Date de publication de la demande: 17.08.2016
(73) Titulaire: LDL Technology, 31520 Ramonville Saint Agne (FR)
(72) Inventeur: MOREAU, Thierry, F-31130 Balma (FR)
(74) Mandataire: Richebourg, Michel François
(86) Numéro de dépôt international: PCT/FR2014/052559
(87) Numéro de publication internationale: WO 2015/052439

(56) Documents cités:
- EP-A2- 1 769 948
- DE-A1-102010 062 058
- FR-A1- 2 895 126
- US-A1- 2011 175 715

## Description

### DOMAINE D'APPLICATION DE L'INVENTION

La présente invention a trait au domaine des systèmes de surveillance de la pression et/ou de la température des pneumatiques d'un véhicule et aux adaptations permettant de réaliser notamment l'apprentissage et la localisation de capteurs associés aux roues du véhicule dans les meilleures conditions.

### DESCRIPTION DE L'ART ANTÉRIEUR

Classiquement, un dispositif de surveillance de la température et/ou de la pression des pneumatiques d'un véhicule comprend les sous-ensembles suivants :
- des modules de prises de mesure et de communication associés à chaque roue,
- un ou plusieurs modules de réception et de transmission des informations issues des modules de prise de mesure et disposés sur l'essieu ou le châssis,
- un moyen d'affichage et de gestion disponible dans l'habitacle pour le chauffeur et communiquant avec lesdits modules de réception et de transmission.

Les communications sont réalisées selon une plage de fréquences en kilohertz dite LF (basses fréquences) ou selon une plage de fréquences en mégahertz dite RF (radio fréquences).

Chaque module de prise de mesure dispose d'un numéro d'identifiant unique permettant de l'identifier parmi les autres modules du véhicule et d'autres véhicules. Chaque module de prise de mesure peut ainsi être identifié par le module de réception.

Pour les camions et les véhicules multi-roues, l'utilisateur doit connaître la roue qui est en défaut de pression pour lancer une maintenance au plus vite. Il est notamment important de savoir si le défaut pneumatique est à imputer à la remorque ou au tracteur, ce qui n'aura pas la même conséquence sur la gestion de la flotte de véhicules.

Il est donc très important de connaître la localisation précise de chaque module de prise de mesure. Une phase dite d'apprentissage où chaque identifiant unique est associé à une localisation, est donc nécessaire.

De nombreuses stratégies d'apprentissage existent pour les automobiles à quatre roues, le dispositif sachant localiser par exemple les roues motrices par la différence de température des pneumatiques assurant la traction, et également différencier la gauche de la droite au moyen d'accéléromètres intégrés dans les modules de prises de mesure.

D'autres stratégies font embarquer des antennes réceptrices dans chaque passage de roue afin de recevoir l'identifiant unique du module de prise de mesure de la roue gérée par cette antenne. Le problème d'une telle solution réside dans le coût et dans la complexité de l'installation lorsqu'il s'agit d'équiper par exemple les dix-huit roues d'un poids-lourd. Un exemple de mise en oeuvre d'une telle stratégie est décrit dans le document DE102010062058, en accord avec les préambules respectifs des revendications 1 et 13, qui propose une méthode et un dispositif pour mesurer un champ LF (basses fréquences) d'un transmetteur LF. Il est également décrit un procédé pour disposer un transmetteur LF pour transmettre un signal LF à un receveur LF installé dans le pneumatique d'un véhicule et/ou pour disposer un receveur RF. Les données représentant l'intensité du signal LF et la position du receveur LF sont stockées. Néanmoins, ce stockage a pour vocation de garder en mémoire au niveau du véhicule ce qui a pu être établi par la phase d'apprentissage. Lorsque le véhicule change de roue ou s'associe à un autre sous-ensemble roulant, une nouvelle phase d'apprentissage est nécessaire. En fait, cet apprentissage est classiquement réalisé manuellement par un opérateur qui doit faire le tour du camion et de la remorque avec un ordinateur pour disposer des identifiants uniques de chaque module de prise de mesure pour chaque roue et pour les déclarer avec leur localisation au module de réception et de transmission. Cette opération est fastidieuse et doit en théorie être réalisée à chaque changement de remorque.

### DESCRIPTION DE L'INVENTION

La demanderesse a donc mené des recherches visant à optimiser l'opération d'apprentissage en proposant une solution simple et peu onéreuse.

Ces recherches ont abouti à la conception et à la mise en oeuvre d'un procédé d'exploitation d'un système de surveillance de la température et/ou de la pression des pneumatiques d'un véhicule comprenant un ou plusieurs sous-ensembles roulants, ledit système incluant les sous-ensembles suivants :
- des modules de prises de mesure et de communication associés à chaque roue,
- un ou plusieurs modules de réception et de transmission des informations transmises en radio fréquences (RF) par les modules de prise de mesure et disposés sur l'essieu ou sur le châssis,
- un moyen d'affichage et de gestion disponible dans l'habitacle pour le chauffeur du véhicule et communiquant par réseau filaire ou en radio fréquences (RF) avec le ou lesdits modules de réception et de transmission.

Ce procédé est remarquable en ce qu'il consiste à installer sur chaque sous-ensemble roulant, un module supplémentaire de stockage et de communication comprenant :
- un moyen de stockage de données dans lequel sont enregistrés, lors d'une phase d'apprentissage, l'ensemble des identifiants uniques et les localisations de chaque module de prise de mesure et de communication dudit sous-ensemble roulant,
- un moyen de communication émettant en radio fréquences (RF) et recevant en basses fréquences (LF) communiquant au moins avec le ou les modules de réception et de transmission,
- un moyen de stockage d'énergie à des fins d'alimentation du moyen de communication,
   de sorte que ledit module de stockage et de communication puisse garder en mémoire l'ensemble des identifiants et des localisations associées du même sous-ensemble roulant et puisse le communiquer instantanément.

La présence de ce module de communication supplémentaire va faciliter non seulement l'opération d'apprentissage mais également l'appairage.

En effet, il est intéressant d'appairer les tracteurs et les remorques afin d'augmenter la rapidité d'apprentissage du système, c'est à dire que les modules de réception et de transmission sachent identifier l'ensemble des modules de prise de mesure de l'attelage dans un temps minimal. Cet appairage évite de reproduire l'opération réalisée par l'opérateur à chaque changement d'attelage. Ainsi, le procédé de l'invention s'applique plus particulièrement à des véhicules comportant plusieurs sous-ensembles roulants susceptibles de se séparer. Pour ce faire, le procédé de l'invention propose d'équiper le tracteur et la ou les remorques du module de stockage et de communication supplémentaire.

Pour ce faire, selon un mode de réalisation préféré, le procédé propose qu'un opérateur équipé d'un module d'interrogation portable (trigger) interroge chaque module de prise de mesure associé à chaque roue d'un même sous-ensemble roulant. Cette interrogation peut être réalisée en basses fréquences (LF) du module d'interrogation vers le module de prise de mesure et en radio fréquences (RF) du module de prise de mesure vers le module d'interrogation. Ce module d'interrogation stocke en mémoire les localisations de chaque module de prise de mesure du sous-ensemble roulant. Ces localisations associées aux identifiants uniques relevés sont alors transmises au module de stockage et de communication supplémentaire associé au châssis dudit sous-ensemble roulant qui va les stocker.

Cette opération n'est réalisée qu'une fois et permet de disposer d'un module connaissant en permanence la localisation et l'identification unique de chaque module de prise de mesure porté par le sous-ensemble roulant. Le moyen d'alimentation en énergie, en donnant une autonomie de fonctionnement au module, va de plus permettre la mise à disposition de cette information même lorsque le véhicule n'est pas en marche (contact non activé). Ces modules de stockage et de communication émettent en permanence à intervalle régulier ou lors d'évènements détectés tel le mouvement du sous-ensemble roulant.

Une telle mise à disposition constitue un grand progrès en regard du réseau classique de réception et de transmission qui n'était activé que lors de la mise en route du véhicule.

Lors de la mise en marche du système de surveillance, les modules de réception et de transmission vont recevoir les informations regroupées et stockées dans les modules de stockage et de communication.

Les modules de réception et de transmission reçoivent alors instantanément la localisation de chaque module de prise de mesure sur le sous-ensemble roulant. Ces informations sont alors envoyées directement ou d'un module de réception à l'autre jusqu'au module d'affichage et de gestion du conducteur ou bien directement par télétransmission au gestionnaire de flotte par un réseau de communication par satellites ou terrestre.

Ce mode d'apprentissage évite donc toute connexion fastidieuse au bus multiplexé (CAN par exemple) du véhicule via l'interface de diagnostic au moyen d'un ordinateur ou module d'interrogation portable. Il assure également que l'opération ne sera à réaliser qu'une seule fois lors de l'équipement du véhicule par le dispositif de surveillance ou lorsqu'il y a des permutations/changements de roues.

Un autre avantage d'une telle configuration réside dans l'inter-communicabilité des modules de réception et de transmission lors de la jonction des sous-ensembles roulants. En effet, par exemple lors d'un changement de remorque, les données stockées par les modules de stockage et de communication supplémentaires de chaque sous-ensemble sont immédiatement transmises par les modules de réception et transmission et la configuration d'appairage du nouveau véhicule est instantanément connue par le module d'affichage et par le gestionnaire de flotte (à distance).

Cette transmission privilégiée peut s'appliquer à toute information contenue dans le moyen de stockage de données. De plus, l'association du module de stockage et de communication supplémentaire avec un module de réception et de transmission va servir de passerelle à tout type d'information et de données susceptibles de provenir par exemple d'un module électronique d'interrogation portable et ce, quelle que soit la quantité de données. En effet, la quantité peut excéder celle susceptible d'être stockée par le module de stockage du fait qu'elles sont immédiatement transmises.

Selon une autre caractéristique particulièrement avantageuse, le procédé consiste à associer audit module de stockage et de communication, un moyen de détection du mouvement du sous-ensemble roulant à des fins de déclenchement de l'émission des données stockées par le moyen de stockage et de communication seulement une fois le mouvement détecté. Ce procédé évite les inconvénients des zones d'ombre, c'est à dire que lorsque deux véhicules sont stationnés l'un à côté de l'autre et que l'un des deux est en phase d'apprentissage, il est préférable que les modules de stockage et de communication du véhicule ayant déjà réalisé leur apprentissage se taisent et ne perturbent pas l'apprentissage en cours.

Déclenchée ou non par la détection du mouvement, une autre caractéristique consiste à comparer au moyen du module de réception et de transmission, les données issues des modules de prise de mesure avec les données issues du moyen de stockage et de communication. En effet, comme expliqué plus haut, le module de réception et de transmission peut réaliser cette vérification, une fois le véhicule sorti de l'éventuelle zone d'ombre. Bien entendu, une différence entre les informations stockées et celles directement émises par les modules de prise de mesure a pour conséquence l'envoi d'un message de défaut de mise à jour des modules de stockage et de communication et donc d'un message au gestionnaire de la flotte qu'une opération de maintenance a été effectuée.

Afin de mettre en oeuvre une telle mise en jour, le module de stockage et de communication peut être disposé à proximité du module de réception et de transmission qui comprend alors un moyen de communication en basses fréquences (LF) qui permet de mettre à jour les données stockées dans le module de stockage simultanément ou lors du premier mouvement du véhicule suivant le changement de roue.

Selon une autre caractéristique particulièrement avantageuse, le procédé est remarquable en ce qu'il consiste à associer audit module de stockage et de communication, un moyen de mesure de la pression et/ou de la température. Cette caractéristique ajoute une fonctionnalité supplémentaire au module de stockage et de communication.

Ainsi, selon une autre caractéristique, le procédé consiste à positionner ledit module de stockage équipé du moyen de prise de mesure, à l'extérieur du sous-ensemble roulant afin de connaître la température de l'air extérieur ambiant à des fins de correction par compensation des mesures prises dans les pneumatiques par les modules de prise de mesure et de communication.

En effet, les modules de prises de mesure de la pression et/ou de la température utilisent des capteurs dont les paramètres mesurés dépendent largement d'une référence à une température ambiante qui est habituellement fixée à 20 degrés Celsius. Or, cette température ambiante peut varier fortement dans la journée ou selon le parcours du véhicule (plaine, montagne...). Ces écarts de température ambiante et donc de pression peuvent, grâce à l'invention, être pris en compte par le procédé de l'invention afin de corriger les paramètres mesurés et d'optimiser les dépenses liées au véhicule (surconsommation de carburant, usure prématurée des pneumatiques...).

Selon une autre caractéristique, le procédé consiste à positionner ledit module de stockage et de communication équipé du moyen de prise de mesure à l'intérieur du volume utile du sous-ensemble roulant. Il est alors possible de disposer de l'ensemble des fonctionnalités du module de stockage tout en surveillant par exemple la température d'une enceinte frigorifiée.

Selon une autre caractéristique particulièrement avantageuse, le procédé consiste :
- à mesurer la puissance du signal reçu par le ou les modules de réception et de transmission et envoyé par les modules de stockage et de communication,
   et
   à connaître la distance séparant les modules de stockage et de communication et les modules de réception et de transmission,
   afin de calibrer l'intensité du signal émis par le ou lesdits modules de réception et de transmission afin de rendre plus précise la localisation des modules de prise de mesure par mesure de l'intensité du signal émis par ces derniers.

Il est en effet connu d'assurer une localisation des modules de prise de mesure notamment sur des roues jumelées par variation et mesure de l'intensité du signal. Une telle mesure requiert la plus grande précision possible quant à la connaissance du signal reçu par le module de réception et de transmission.

La présence de ces modules de stockage et de communication permet ainsi d'étalonner en intensité de signal (RSSI), les modules de réception.

Selon une autre caractéristique particulièrement avantageuse de l'invention, le procédé consiste à recevoir, au moyen du module de réception et de transmission, les signaux de modules de stockage et de communication d'autres sous-ensembles roulants et à émettre une alerte au niveau du module d'affichage et de gestion pour éviter tout contact. Basés sur une émission continue des modules de stockage et de prise de mesure alimentés indépendamment, les modules de stockage disposent, selon un mode de réalisation préféré, d'une portée en champ libre d'environ 15 mètres qui permet d'être détectés à distance par des modules de réception et de transmission d'autres véhicules. Ainsi, le système de surveillance peut, par exemple, émettre un message d'alerte de proximité par rapport à un autre camion qui serait dans un angle mort lors d'une manoeuvre de marche arrière. Afin de mettre en oeuvre une telle caractéristique, le module de réception et de transmission est équipé d'un moyen de communication en basses fréquences (LF). Lors de la marche arrière, le réseau électronique (CAN) du véhicule transmet au module de réception, l'information marche arrière qui lui active le module de stockage qui peut alors fonctionner tel un radar de recul.

Selon une autre caractéristique, le procédé consiste à recevoir, au moyen d'un module de réception et de transmission, les signaux de modules de stockage et de communication associés à des structures fixes. Ainsi, un module de stockage et de réception peut être installé sur un quai pour avertir le système du camion et donc son conducteur qui celui-ci s'approche à une distance critique du quai.

Selon une autre caractéristique, le procédé consiste à enregistrer à des fins d'identification dans le moyen de stockage de données, des données relatives à un ou plusieurs des objets suivants
- sous-ensemble roulant,
- véhicule,
- utilisateur,
- propriétaire.

Par exemple, les informations liées aux véhicules peuvent concerner ses caractéristiques telles sa longueur, sa hauteur, sa masse qui pourront être exploitées pour aider aux manoeuvres de recul, s'assurer du passage sous les ponts ou de la compatibilité de la remorque avec le tracteur.

Ces informations peuvent être également utilisées pour gérer et surveiller la flotte des véhicules présents sur une aire de parking.

De même, selon une autre caractéristique le procédé consiste à enregistrer dans le moyen de stockage de données, des données relatives à la maintenance, à l'historique de roulage ou des données mesurées.

Chaque sous-ensemble roulant peut ainsi transporter et mettre à disposition dans une mémoire consultable, des informations diverses telles :
- la dernière intervention de maintenance (sur les pneumatiques mais aussi sur d'autres parties du véhicule),
- historiques des roulages de type tachygraphe qui peut être commandé par la détection de mouvement,
- l'historique des températures/pressions mesurés notamment celles de l'air ambiant,
- etc...

Selon une autre caractéristique particulièrement avantageuse de l'invention, le procédé consiste à enregistrer dans le moyen de stockage de données un code confidentiel transmis au client final recevant la marchandise. Le ou les modules de stockage et de communication servent alors de moyen de certification d'authentification attaché au suivi d'une livraison. Ainsi, selon ce procédé, l'expéditeur lors du chargement d'une remorque ou d'un container peut enregistrer un code confidentiel dans le module de stockage. Ce code est transmis de manière confidentielle au client final qui doit réceptionner la cargaison. Ce client final peut effectuer un suivi de sa remorque via les applications de télématique embarquée (par exemple : localisation satellite type GPS de la remorque identifiée avec l'identifiant du module de stockage). De cette façon, le client peut estimer l'heure d'arrivée du chargement lui permettant de mieux organiser ses flux logistiques. De plus, lors de l'arrivée de la remorque à quai, le client a la possibilité de valider la bonne réception de la marchandise en communiquant (à l'aide d'un module d'interrogation portable à basses fréquences par exemple) avec le module de stockage. Le client entre son code confidentiel dans le module de stockage, ce qui authentifie la bonne réception des marchandises transportées et remplace avantageusement la signature manuscrite sur un terminal électronique que doit réaliser aujourd'hui le receveur, cette signature ne garantissant pas l'identité du receveur. Le module de stockage communique en temps réel, via la télématique embarquée, la bonne réception de la marchandise. Des informations de satisfaction client sur le bien réceptionné peuvent également être codées et transmises via ce procédé.

Un autre objet de l'invention concerne le dispositif permettant de mettre en oeuvre le procédé ci-dessus décrit. Selon une caractéristique particulièrement avantageuse, ledit module de stockage et de communication est constitué par un module de prise de mesure supplémentaire regroupant les mêmes fonctionnalités que celles des modules de prise de mesure des roues et venant se fixer au châssis du sous-ensemble roulant. Ainsi, selon cette caractéristique le module de stockage et de communication est constitué par un module de prise de mesure et de communication supplémentaire qui va être installé sur chaque sous-ensemble roulant et dont le moyen de stockage de données va servir à enregistrer toutes les données de localisation et d'identifiant unique des modules de prises de mesures logés dans les roues.

De plus, le moyen de prise de mesure va permettre la mise en oeuvre du procédé consistant à prendre en compte la température ambiante extérieure.

Un autre avantage réside dans la possibilité de surveillance de la température des remorques frigorifiques, par positionnement dudit dispositif non à l'extérieur mais à l'intérieur de l'enceinte frigorifiée conformément à une des caractéristiques du procédé ci-dessus décrit.

Un autre avantage réside dans le fait que le module de stockage et de communication est alors alimenté en continu par sa propre batterie comme les modules de prises de mesure et permet la configuration du système sans que le sous-ensemble roulant soit alimenté.

Ce dispositif exploite ainsi un moyen connu du système de surveillance mais avec une fonction différente de celles de prise de de mesure dans le pneumatique et de stockage d'un identifiant unique. En effet, la mémoire est exploitée pour stocker l'ensemble des localisations et des identifiants associés du sous-ensemble roulant et le capteur est utilisé (éventuellement) pour connaître des paramètres extérieurs ou intérieurs mais hors pneumatiques.

De plus, les fonctions de radar de recul décrites ci-dessus dans une des caractéristiques du procédé et nécessitant une portée d'antenne plus importante, sont rendues possibles du fait qu'un tel module se trouve désormais à l'extérieur et non à l'intérieur d'un pneumatique.

De même, les fonctions de stockage de données supplémentaires que celles habituellement stockées sont rendues possibles du fait qu'un tel module est libéré d'autres fonctions.

Ainsi, par exemple, le moyen de stockage équipant les modules de prise de mesure susceptibles de communiquer avec des puces RFID associées à chaque pneumatique est suffisamment dimensionné afin de contenir l'ensemble des identifiants et les localisations des modules de prise de mesure du sous-ensemble roulant du fait de la libération du volume de stockage par l'absence de communication nécessaire entre lesdites puces RFID et le moyen de stockage et de communication supplémentaire.

Selon une autre caractéristique, le dispositif permettant de mettre en oeuvre le procédé de l'invention est remarquable en ce qu'il comprend un moyen de stockage d'énergie supplémentaire venant se connecter au module de réception et de transmission. La mise en oeuvre de l'invention ne passe pas alors par un module de prise de mesure rajouté mais par des fonctionnalités supplémentaires ajoutées au module de réception et de transmission de données classique. Afin de mettre en oeuvre une communication plus précise, un moyen de communication par basses fréquences (LF) équipe au module de réception et de transmission.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un système de surveillance conforme à l'invention.

### BRÈVE DESCRIPTION DES DESSINS

La figure 1 est un dessin schématique d'un mode de réalisation d'un système conforme à l'invention;
La figure 2 est un dessin schématique illustrant les différentes communications entre les différents modules du système.

### DESCRIPTION D'UN MODE DE RÉALISATION PRÉFÉRÉ

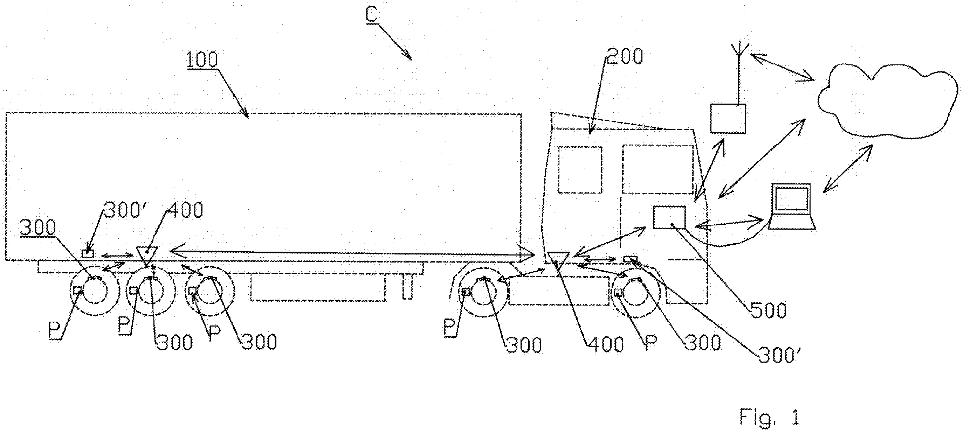

Comme illustré sur le dessin de la figure 1, le camion référencé C dans son ensemble, comprend deux sous-ensembles roulants constitués d'une part, par la remorque 100 et d'autre part, par le tracteur 200. Le camion est équipé d'un système de surveillance de la température et/ou de la pression des pneumatiques. Ce système inclut les modules suivants :
- des modules de prises de mesure et de communication 300 présents dans chaque pneumatique de roue R,
- des puces RFID référencées P présentes dans chaque pneumatique,
- un module présent sur chaque sous-ensemble roulant 100 et 200, de réception et de transmission 400 des informations issues des modules de prises de mesure 300,
- un moyen d'affichage et de gestion 500 disponible dans l'habitacle pour le chauffeur et communiquant avec lesdits modules de réception et de transmission 400.

Conformément à l'invention, un module de prise de mesure et de communication supplémentaire 300' est installé sur chaque châssis de sous ensemble roulant. Ces modules 300' sont identiques aux modules 300 mais mettent en oeuvre d'autres fonctions. Ainsi, conformément à l'invention, la mémoire des modules 300' accueille, lors d'une phase d'apprentissage, l'ensemble des identifiants uniques et des localisations associées de chaque module de prise de mesure 300 logés dans les roues du sous-ensemble roulant sur lequel ils sont installés.

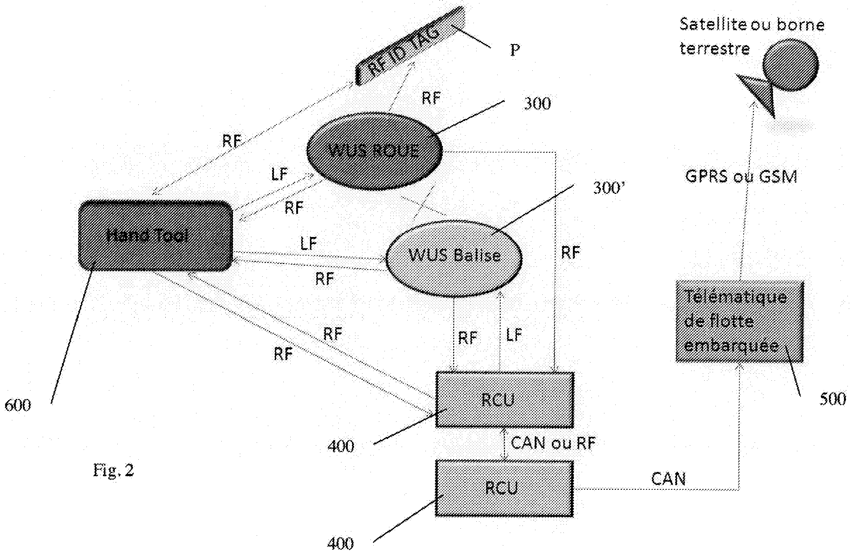

Comme illustré sur le dessin de la figure 2 et selon un mode préféré, l'apprentissage est réalisé au moyen d'un module d'interrogation portable 600 (trigger) venant interroger chaque module de prise de mesure 300 et chaque puce P d'un même ensemble roulant. Cette interrogation peut être réalisée en basses fréquences (LF) et le module de prise de mesure peut répondre en radio fréquences (RF) alors qu'elle peut être réalisée en radio fréquences (RF) pour les puces qui répondent également par radio fréquences (RF). Ainsi, le trigger stocke en mémoire les localisations de chaque module de prise de mesure 300 sur l'ensemble roulant. Une fois le tour du sous-ensemble réalisé, par exemple les six roues du tracteur 200, l'opérateur vient à proximité du module de stockage 300' installé sur le tracteur 200 et y transfère en basses fréquences (LF) les données de la configuration que le trigger vient d'apprendre. L'opérateur procède ensuite de même pour chaque sous-ensemble roulant.

Ainsi, chaque module de stockage et de transmission 300' connait la localisation et l'identifiant unique de chaque module de prise de mesure et est susceptible de communiquer cette information instantanément au module de réception et de transmission 400 en radio fréquences (RF) qui, quant à eux, communiquent par le réseau électronique (CAN) ou en radio fréquences avec les autres modules de réception et de transmission 400. Afin que lesdits modules de réception 400 puissent interroger ou activer les modules de stockage, un moyen de communication en basses fréquences équipe les modules de réception 400. Les modules de prise de mesure 300 ne communiquent pas avec le module de prise de mesure 300'. De plus, seule une transmission en radio fréquences (RF) est mise en oeuvre entre le module de prise de mesure 300 et le module de réception et de transmission 400.

On comprend que le procédé et le dispositif qui viennent d'être ci-dessus décrits et représentés, l'ont été en vue d'une divulgation plutôt que d'une limitation. Bien entendu, divers aménagements, modifications et améliorations pourront être apportés à l'exemple ci-dessus, sans pour autant sortir du cadre de l'invention.

## Revendications

1. Procédé d'exploitation d'un système de surveillance de la température et/ou de la pression des pneumatiques d'un véhicule (C) comprenant un ou plusieurs sous-ensembles roulants (100, 200), ledit système incluant les sous-ensembles suivants :
- des modules de prises de mesure et de communication (300) associés à chaque roue (R),
- un ou plusieurs modules de réception et de transmission (400) des informations transmises en radio fréquences (RF) par les modules de prise de mesure et disposés sur l'essieu ou sur le châssis du véhicule (C),
- un moyen d'affichage et de gestion (500) disponible dans l'habitacle pour le chauffeur du véhicule (C) et communiquant par réseau filaire ou en radio fréquences (RF) avec le ou lesdits modules de réception et de transmission (300),
**CARACTÉRISÉ EN CE Qu'**il consiste à installer sur chaque sous-ensemble roulant (100, 200), un module supplémentaire de stockage et de communication (300') comprenant :
- un moyen de stockage de données dans lequel sont enregistrés, lors d'une phase d'apprentissage, l'ensemble des identifiants uniques et les localisations de chaque module de prise de mesure et de communication (300) dudit sous-ensemble roulant (100, 200),
- un moyen de communication émettant en radio fréquences (RF) et recevant en basses fréquences (LF) communiquant au moins avec le ou les modules de réception et de transmission (400),
- un moyen de stockage d'énergie à des fins d'alimentation du moyen de communication,
de sorte que ledit module de stockage et de communication (300') puisse garder en mémoire l'ensemble des identifiants et localisations associées du même sous-ensemble roulant (100, 200) et puisse le communiquer instantanément.

2. Procédé selon la revendication 1, **CARACTÉRISÉ EN CE QU'**il consiste à associer audit module de stockage et de communication (300') un moyen de détection du mouvement du sous-ensemble roulant (100, 200) à des fins de déclenchement de l'émission des données stockées par le moyen de communication seulement une fois le mouvement détecté.

3. Procédé selon la revendication 1 et /ou 2, **CARACTÉRISÉ EN CE QU'**il consiste à comparer, au moyen du module de réception et de transmission (400), les données issues des modules de prise de mesure (300) avec les données issues du moyen de stockage et de communication (300').

4. Procédé selon la revendication 1, **CARACTÉRISÉ EN CE QU'**il consiste à associer au dit module de stockage et de communication (300'), un moyen de mesure de la pression et/ou de la température.

5. Procédé selon la revendication 4, **CARACTÉRISÉ EN CE QU'**il consiste à positionner ledit module de stockage et de communication (300') équipé du moyen de prise de mesure, à l'extérieur du sous-ensemble roulant (100, 200) afin de connaître la température de l'air extérieur ambiant à des fins de correction par compensation des mesures prises dans les pneumatiques par les modules de prise de mesure et de communication (300).

6. Procédé selon la revendication 4, **CARACTÉRISÉ EN CE QU'**il consiste à positionner ledit module de stockage et de communication (300') équipé du moyen de prise de mesure à l'intérieur du volume utile du sous-ensemble roulant (100, 200).

7. Procédé selon la revendication 1, **CARACTÉRISÉ EN CE QU'**il consiste :
- à mesurer la puissance du signal reçu par le ou les modules de réception et de transmission (400) et envoyé par les modules de stockage et de communication (300'),
- et à connaître la distance séparant les modules de stockage et de communication (300') et les modules de réception et de transmission (400),
afin de calibrer l'intensité du signal émis par le ou lesdits modules de réception et de transmission (400) afin de rendre plus précise la localisation des modules de prise de mesure et de communication (300) par mesure de l'intensité du signal émis par ces derniers.

8. Procédé selon la revendication 1, **CARACTÉRISÉ EN CE QU'**il consiste à recevoir, au moyen du module de réception et de transmission (400), les signaux de modules de stockage et de communication (300') d'autres sous-ensembles roulants et à émettre une alerte au niveau du module d'affichage et de gestion (500) pour éviter tout contact.

9. Procédé selon la revendication 1, **CARACTÉRISÉ EN CE QU'**il consiste à recevoir, au moyen d'un module de réception et de transmission (400), les signaux de modules de stockage et de communication (300') associés à des structures fixes.

10. Procédé selon la revendication 1, **CARACTÉRISÉ EN CE QU'**il consiste à enregistrer à des fins d'identification, dans le moyen de stockage de données, des données relatives à un ou plusieurs des objets suivants :
- sous-ensemble roulant (100, 200),
- véhicule (C),
- utilisateur,
- propriétaire.

11. Procédé selon la revendication 1, **CARACTÉRISÉ EN CE QU'**il consiste à enregistrer dans le moyen de stockage de données, des données relatives à la maintenance, à l'historique de roulage ou des données mesurées.

12. Procédé selon la revendication 1, **CARACTÉRISÉ EN CE QU'**il consiste à enregistrer dans le moyen de stockage de données, un code confidentiel transmis au client final recevant la marchandise.

13. Dispositif permettant de mettre en oeuvre le procédé selon la revendication 1, **CARACTÉRISÉ PAR LE FAIT QUE** ledit module de stockage et de communication (300') est constitué par un module de prise de mesure supplémentaire (300') regroupant les mêmes fonctionnalités que celles des modules de prise de mesure (300) des roues et venant se fixer au châssis du sous-ensemble roulant (100, 200).

14. Dispositif permettant de mettre en oeuvre le procédé selon la revendication 1, **CARACTÉRISÉ PAR LE FAIT QU'**il comprend un moyen de stockage d'énergie supplémentaire venant se connecter au module de réception et de transmission (400)).

15. Dispositif selon la revendication 14, **CARACTÉRISÉ PAR LE FAIT QU'**un moyen de communication en basses fréquences équipe le module de réception et de transmission (400).

## Patentansprüche

1. Verfahren zum Betreiben eines Systems zum Überwachen der Temperatur und/oder des Drucks der Reifen eines Fahrzeugs (C), das eine oder mehrere fahrende Teilbaugruppen (100, 200) umfasst, wobei das System die folgenden Teilbaugruppen einschließt:
- Messwertnahme- und Kommunikationsmodule (300), die jedem Rad (R) zugeordnet sind,
- ein oder mehrere Empfangs- und Übertragungsmodule (400) der Informationen, die auf Hochfrequenz (RF) von den Messwertnahmemodulen übertragen werden, und an der Achse oder am Rahmen des Fahrzeugs (C) angeordnet,
- ein Anzeige- und Verwaltungsmittel (500), das im Fahrgastraum für den Fahrer des Fahrzeugs (C) zur Verfügung steht und über drahtgebundenes Netzwerk oder auf Hochfrequenz (RF) mit dem oder den Empfangs- und Übertragungsmodulen (300) kommuniziert,
**dadurch gekennzeichnet, dass** es darin besteht, an jeder fahrenden Teilbaugruppe (100, 200) ein zusätzliches Speicher- und Kommunikationsmodul (300') zu installieren, das umfasst:
- ein Datenspeichermittel, in dem im Zuge einer Lernphase die Gesamtheit der eindeutigen Kennungen und die Lokalisationen jedes Messwertnahme- und Kommunikationsmoduls (300) der fahrenden Teilbaugruppe (100, 200) eingespeichert werden,
- ein Kommunikationsmittel, das auf Hochfrequenz (RF) sendet und auf Niederfrequenz (LF) empfängt und das mindestens mit dem oder den Empfangs- und Übertragungsmodulen (400) kommuniziert,
- ein Energiespeichermittel zum Zwecke der Versorgung des Kommunikationsmittels,
derart, dass das Speicher- und Kommunikationsmodul (300') die Gesamtheit der Kennungen und zugeordneten Lokalisationen ein und derselben fahrenden Teilbaugruppe (100, 200) im Speicher halten kann und dieselbe augenblicklich kommunizieren kann.

2. Verfahren nach Anspruch 1, **dadurch gekennzeichnet, dass** es darin besteht, dem Speicher- und Kommunikationsmodul (300') ein Mittel zum Erkennen der Bewegung der fahrenden Teilbaugruppe (100, 200) zuzuordnen zum Zwecke des Auslösens der Sendung der gespeicherten Daten durch das Kommunikationsmittel nur dann, wenn die Bewegung erkannt wird.

3. Verfahren nach Anspruch 1 und/oder 2, **dadurch gekennzeichnet, dass** es darin besteht, mittels des Empfangs- und Übertragungsmoduls (400) die aus den Messwertnahmemodulen (300) stammenden Daten mit den aus dem Speicher- und Kommunikationsmittel (300') stammenden Daten zu vergleichen.

4. Verfahren nach Anspruch 1, **dadurch gekennzeichnet, dass** es darin besteht, dem Speicher- und Kommunikationsmodul (300') ein Mittel zum Messen des Drucks und/oder der Temperatur zuzuordnen.

5. Verfahren nach Anspruch 4, **dadurch gekennzeichnet, dass** es darin besteht, das mit dem Messwertnahmemittel ausgerüstete Speicher- und Kommunikationsmodul (300') außerhalb der fahrenden Teilbaugruppe (100, 200) zu positionieren, um zum Zwecke der Korrektur durch Kompensation der von den Messwertnahme- und Kommunikationsmodulen (300) in den Reifen genommenen Messwerte die Außenumgebungslufttemperatur in Erfahrung zu bringen.

6. Verfahren nach Anspruch 4, **dadurch gekennzeichnet, dass** es darin besteht, das mit dem Messwertnahmemittel ausgerüstete Speicher- und Kommunikationsmodul (300') innerhalb des Nutzvolumens der fahrenden Teilbaugruppe (100, 200) zu positionieren.

7. Verfahren nach Anspruch 1, **dadurch gekennzeichnet, dass** es darin besteht:
- die Leistung des von dem oder den Empfangs- und Übertragungsmodulen (400) empfangenen und von den Speicher- und Kommunikationsmodulen (300') gesendeten Signals zu messen,
- und den Abstand, der die Speicher- und Kommunikationsmodule (300') und die Empfangs- und Übertragungsmodule (400) trennt, in Erfahrung zu bringen, um die Stärke des von dem oder den Empfangs- und Übertragungsmodulen (400) gesendeten Signals zu kalibrieren, um die Lokalisation der Messwertnahme- und Kommunikationsmodule (300) durch Messen der Stärke des von diesen letzteren gesendeten Signals genauer zu machen.

8. Verfahren nach Anspruch 1, **dadurch gekennzeichnet, dass** es darin besteht, mittels des Empfangs- und Übertragungsmoduls (400) die Signale von Speicher- und Kommunikationsmodulen (300') von weiteren fahrenden Teilbaugruppen zu empfangen und einen Alarm auf Ebene des Anzeige- und Verwaltungsmoduls (500) auszugeben, um jeden Kontakt zu vermeiden.

9. Verfahren nach Anspruch 1, **dadurch gekennzeichnet, dass** es darin besteht, mittels eines Empfangs- und Übertragungsmoduls (400) die Signale von Speicher- und Kommunikationsmodulen (300'), die festen Strukturen zugeordnet sind, zu empfangen.

10. Verfahren nach Anspruch 1, **dadurch gekennzeichnet, dass** es darin besteht, zum Zwecke der Identifizierung Daten in Bezug auf eines oder mehrere der folgenden Objekte in dem Datenspeichermittel einzuspeichern:
- fahrende Teilbaugruppe (100, 200),
- Fahrzeug (C),
- Benutzer,
- Eigentümer.

11. Verfahren nach Anspruch 1, **dadurch gekennzeichnet, dass** es darin besteht, in dem Datenspeichermittel Daten in Bezug auf die Wartung, die Fahrgeschichte oder gemessene Daten einzuspeichern.

12. Verfahren nach Anspruch 1, **dadurch gekennzeichnet, dass** es darin besteht, in dem Datenspeichermittel einen vertraulichen Code einzuspeichern, der an den Endkunden, welcher die Ware empfängt, übertragen wird.

13. Vorrichtung, die es ermöglicht, das Verfahren nach Anspruch 1 umzusetzen, **dadurch gekennzeichnet, dass** das Speicher- und Kommunikationsmodul (300') von einem zusätzlichen Messwertnahmemodul (300') gebildet wird, das ein und dieselben Funktionalitäten wie diejenigen der Messwertnahmemodule (300) der Räder zusammenfasst und am Rahmen der fahrenden Teilbaugruppe (100, 200) befestigt wird.

14. Vorrichtung, die es ermöglicht, das Verfahren nach Anspruch 1 umzusetzen, **dadurch gekennzeichnet, dass** sie ein zusätzliches Energiespeichermittel umfasst, das mit dem Empfangs- und Übertragungsmodul (400) verbunden wird.

15. Vorrichtung nach Anspruch 14, **dadurch gekennzeichnet, dass** ein Niederfrequenz-Kommunikationsmittel das Empfangs- und Übertragungsmodul (400) ausrüstet.

## Claims

1. Method for utilizing a system for monitoring the temperature and/or the pressure of the tyres of a vehicle (C) comprising one or more rolling sub-assemblies (100, 200), said system including the following sub-assemblies:
- measurement pick-up and communication modules (300) associated with each wheel (R),
- one or several reception and transmission modules (400) of information transmitted by radio frequencies (RF) by the measurement pick-up modules and arranged on the axle or the chassis of the vehicle (C),
- a means of display and management (500) available in the cab for the driver of the vehicle (C) and communicating by wired network or by radio frequencies (RF) with said reception and transmission module or modules (300),
**CHARACTERISED IN THAT** it consists in installing on each rolling sub-assembly (100, 200), an additional storage and communication module (300') comprising:
- a data storage means in which are recorded, during a learning phase, the set of unique identifiers and the locations of each measurement pick-up and communication module (300) of said rolling sub-assembly (100, 200),
- a means of communication emitting in radio frequencies (RF) and receiving in low frequencies (LF) communicating at least with the reception and transmission module or modules (400),
- a means of storing energy for the purposes of powering the communication means,
in such a way that said storage and communication module (300') can retain in memory the set of identifiers and associated locations of the same rolling sub-assembly (100, 200) and can communicate it instantaneously.

2. Method according to claim 1, **CHARACTERISED IN THAT** it consists in associating to said storage and communication module (300') a means for detecting movement of the rolling sub-assembly (100, 200) for the purposes of triggering the emission of the data stored by the means of communication only once the movement has been detected.

3. Method according to claim 1 and/or 2, **CHARACTERISED IN THAT** it consists in comparing, by means of the reception and transmission module (400), the data coming from the measurement modules (300) with the data coming from the means of storage and communication (300').

4. Method according to claim 1, **CHARACTERISED IN THAT** it consists in associating with said storage and communication module (300'), a means for measuring the pressure and/or the temperature.

5. Method according to claim 4, **CHARACTERISED IN THAT** it consists in positioning said storage and communication module (300') provided with the measurement pick-up means, outside of the rolling sub-assembly (100, 200) in order to know the temperature of the ambient outside air for the purposes of correction by offsetting the measurements taken in the tyres by the measurement pick-up and communication modules (300).

6. Method according to claim 4, **CHARACTERISED IN THAT** it consists in positioning said storage and communication module (300') provided with the measurement pick-up means inside the useful volume of the rolling sub-assembly (100, 200).

7. Method according to claim 1, **CHARACTERISED IN THAT** it consists:
- in measuring the power of the signal received by the reception and transmission module or modules (400) and sent by the storage and communication modules (300'),
- and in knowing the distance that separates the storage and communication modules (300') and the reception and transmission modules (400),
in order to calibrate the intensity of the signal emitted by said reception and transmission module or modules (400) in order to render more accurate the location of the measurement pick-up and communication modules (300) by measuring the intensity of the signal emitted by the latter.

8. Method according to claim 1, **CHARACTERISED IN THAT** it consists in receiving, by means of the reception and transmission module (400), the signals of the storage and communication modules (300') of other rolling sub-assemblies and in emitting an alert on the display and management module (500) in order to prevent any contact.

9. Method according to claim 1, **CHARACTERISED IN THAT** it consists in receiving, by means of a reception and transmission module (400), the signals from the storage and communication modules (300') associated with fixed structures.

10. Method according to claim 1, **CHARACTERISED IN THAT** it consists in recording for the purposes of identification, in the data storage means, data relative to one or several of the following objects:
- rolling sub-assembly (100, 200),
- vehicle (C),
- user,
- owner.

11. Method according to claim 1, **CHARACTERISED IN THAT** it consists in recording in the data storage means, data relative to the maintenance, road activity history or data measured.

12. Method according to claim 1, **CHARACTERISED IN THAT** it consists in recording in the data storage means, a confidential code transmitted to the final client receiving the merchandise.

13. Device making it possible to implement the method according to claim 1, **CHARACTERISED BY** THE FACT THAT said storage and communication module (300') is constituted by an additional measurement pick-up module (300') grouping together the same functionalities as those of the measurement pick-up modules (300) of the wheels and being fixed to the chassis of the rolling sub-assembly (100, 200).

14. Device making it possible to implement the method according to claim 1, **CHARACTERISED BY** THE FACT THAT it comprises an additional means of storing energy that is connected to the reception and transmission module (400).

15. Device according to claim 14, **CHARACTERISED BY** THE FACT THAT a means of communication in low frequencies is provided on the reception and transmission module (400).
